# EUROPEAN PATENT APPLICATION

(11) **EP 0 622 606 A2**
(43) Date of publication of application: **02.11.1994**
(21) Application number: 94303164.1
(22) Date of filing: 29.04.1994
(51) Int. Cl.: G01B 3/46, G01B 5/12

(54) **Centring tool for cylinder gauge**

(30) Priority: 30.04.1993 US 54288
(71) Applicant: Isler, David J., Newton Falls, Ohio 44444 (US)
(72) Inventor: Isler, David J., Newton Falls, Ohio 44444 (US)
(74) Representative: Feakins, Graham Allan

(57) **Abstract**

A centring tool (10) for use with a telescopic cylinder wall gauge (11) with opposed, springloaded contact plungers (15, 16), to measure the inside diameter (31) of the cylinder includes a mounting base (17) having spaced, angularly-disposed, apertured mounting surfaces (23, 24), a centring pin (27, 28) secured within each mounting surface (23, 24), a bore (25) extending through said mounting base (17) in the same plane as or a parallel plane to the axes of said centring pins, and means (26) for aligning and securing the centring tool on a mounting body (14) of the telescopic cylinder wall gauge.

The centring tool adapts to cylinder gauges to provide a fast, accurate one-time reading of the cylinder gauge and provides adjustable interali- gnment elements to provide positive positioning of the gauge within the interior of the cylinder bore to determine the internal diameter of the cylinder.

## Description

This invention relates to a centring tool for a cylinder gauge and more particularly to a telescopic gauge that is used to transfer the interdimensions of a cylinder for measuring purposes within thousandths of an inch (one inch = 25.40 mm).

Known devices have relied on a variety of different structural configurations that are adapted to provide automatic centring of measuring gauges within cylinders. Examples of such are US-A-2,470,635; US-A-3,836,277, US-A-4,754,551 and US-A-4,773,164.

Telescopic gauges are known to which the invention is designed to adapt and are used to transfer internal measurements from the cylinder to be measured with precision calibers. These gauges have opposite telescopically extensible spring-urged contact plungers that can be locked once within the cylinder and then removed and measured.

US-A-2,470,635 shows a gauge positioned on a central shaft. The gauge has a pair of chucks with resilient jaws extending therefrom.

In US-A-3,836,277, a centring tool is disclosed wherein a tool is centred within a cylinder by pins on respective spring-urged arms pivoted about and to the tool.

US-A-4,754,551 is directed to a centring gauge tool in which sensing fingers are mounted on a conical insert and expand outwardly to engage the inner surface, centring and measuring the tool.

US-A-4,773,164 shows a self-aligning caliber bar in which two sets of aligned spaced pivoting fingers extend outwardly from a central mounting body to align same within a cylinder enclosure.

According to the present invention, there is provided a centring tool for use with a telescopic cylinder wall gauge to measure inside diameter of the cylinder, the gauge including a handle and a pair of oppositely disposed spring loaded contact plungers extending from a mounting body thereof, characterised in that said centring tool, a bore extending through said mounting base in the same plane as or a parallel plane to the axes of said centring pins, and means for aligning and securing said centring tool on the mounting body of said telescopic cylinder wall gauge.

For a better understanding of the present invention, and to show how the same may be carried into effect, reference will now be made, by way of example, to the accompanying drawings, in which:-
Figure 1 is a perspective view of a telescopic cylinder gauge with a centring tool positioned thereon;
Figure 2 is a plan view of the centring tool;
Figure 3 is a front view of the centring tool;
Figure 4 is a cross-sectional view on line 4-4 of Figure 2;
Figure 5 is a plan view of the centring tool positioned on a telescopic gauge within a cylinder in use;
Figure 6 is a side view of a guide pin of the tool; and
Figure 7 is a side view of an alternative guide pin configuration.

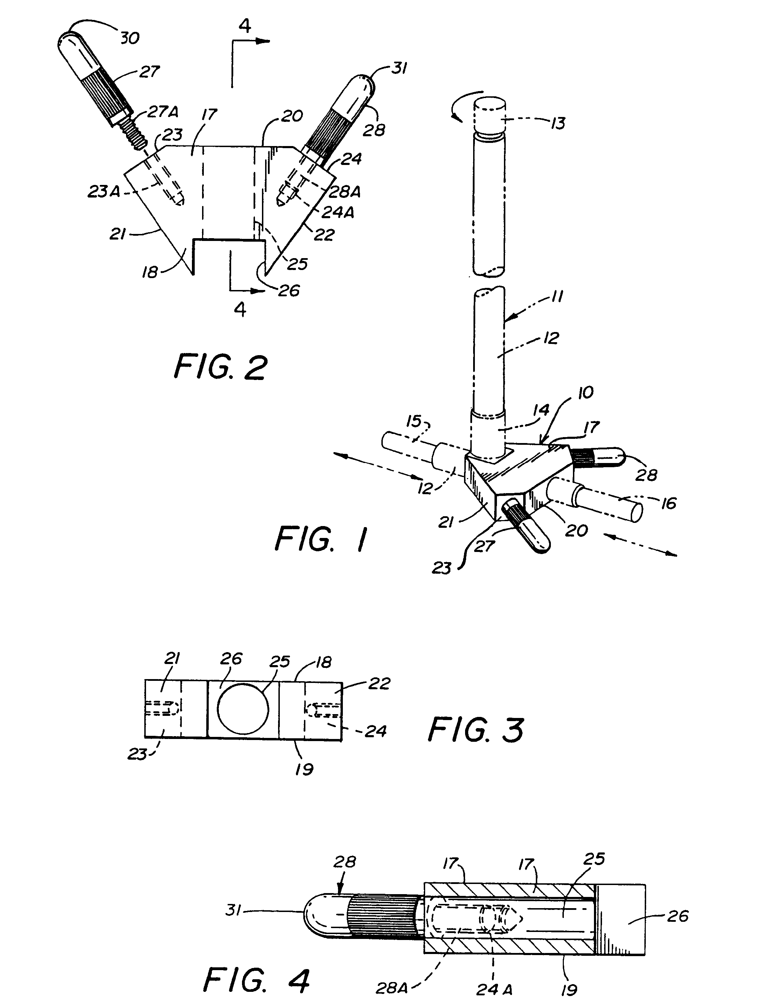

Referring to Figure 1 of the drawings, a centring device 10 is positioned on a telescopic gauge 11, shown in broken lines, the gauge having an elongate tubular handle portion 12 with a locking screw 13 on one end and a T-shaped mounting body 14 on the opposite end thereof. A pair of telescopically extendable contact plungers 15 and 16 are movably positioned within the mounting body 14 at right angles to the handle portion 12.

The centring device 10 is positioned on the mounting body 14 and the drawings show that it has a generally triangular mounting base 17 with corresponding parallel top and bottom surfaces 18 and 19. Angled side surfaces are provided on the mounting base 17 as a mounting surface 20, opposing inclined surfaces 21 and 22 and pin mounting surfaces 23 and 24 therebetween.

The mounting surface 20 has a bore 25 extending through the mounting base 17 and reaching a notched area 26 between the respective surfaces 21 and 22. Each pin mounting surface 23 and 24 has a threaded bore 23A and 24A, respectively, for selective registration with centring pins 27 and 28, the axes of the three bores being in the same plane or parallel planes. Each centring pin 27 and 28 has a threaded mounting shaft 27A and 28A, respectively, with rounded, cylinder engagement ends 30 and 31.

For use, the centring device 10 is positioned over one end of the mounting body 14 by friction fit with the contact plunger 16 extending through the bore 25 within the notched area 26 and abutting same adjacent the handle portion 12.

Once positioned, the centring device 10 is joined to the telescopic gauge 11 and the centring pins 27, 28 are thus positioned in spaced offset angular relation to the contact plunger 16 to define a generally triangular configuration therebetween.

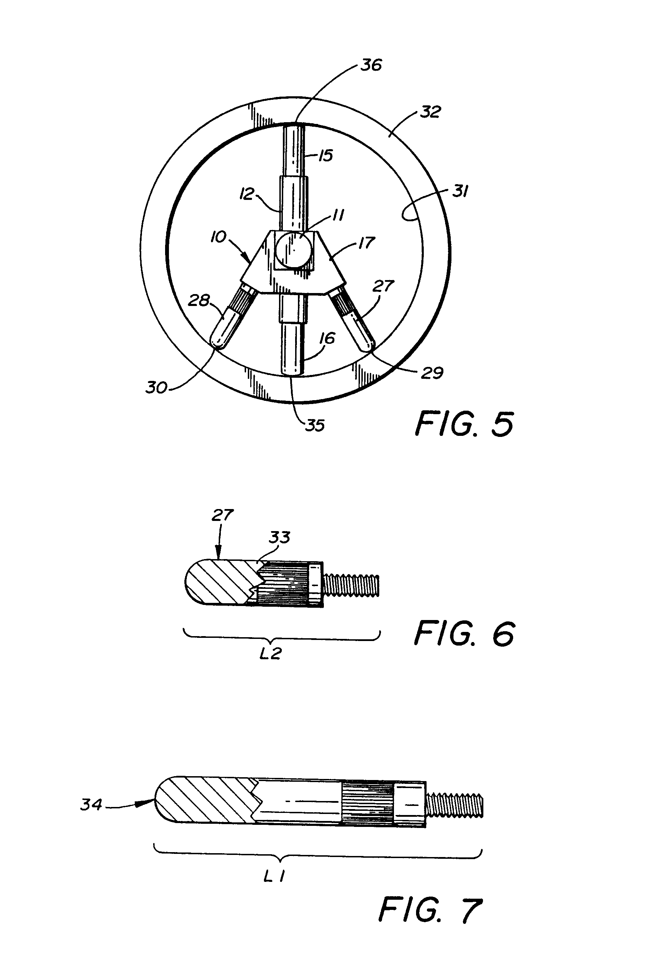

By defining a plurality of spaced fixed contact points 29 and 30 within an interior surface wall 31 of a cylinder 32 (Figure 5), the telescopic gauge 11 is perfectly centred to obtain an accurate first time reading by engagement with the opposed contact plungers 15 and 16 against the interior surface wall 31 of the cylinder 32. The contact plungers 15 and 16 will adjust to the interior surface wall 31 at aligned opposing contact points 35 and 36 then they are locked in that position by rotation of the locking screw 13. The telescopic gauge 11 is then removed from the cylinder 32 for measuring.

Referring now to Figure 6, the centring pin 27 is shown with a portion in cross-section defining the solid nature of the centring pin construction at 33.

In order to accommodate a variety of cylinder sizes, alternative centring pins must be provided that will mount within the respective threaded bores 23A and 24A in the mounting body 17. Thus, in Figure 7, an alternative centring pin 34 is shown, wherein the overall length indicated by L1 is proportionately greater than that of the centring pins 27 and 28 as i llustrat- ed by L2 in Figure 6.

The centring device 10 can be permanently attached to the telescopic gauge 11 during manufacture or alternatively affixed to the telescopic gauge 11 as an aftermarket accessory as described above.

## Claims

1. A centring tool (10) for use with a telescopic cylinder wall gauge (11) to measure inside diameter (31) of the cylinder, the gauge including a handle (12) and a pair of oppositely disposed spring loaded contact plungers (15, 16) extending from a mounting body (14) thereof, characterised in that said centring tool (10) includes a mounting base (17) having spaced, angularly-disposed, apertured mounting surfaces (23, 24), a centring pin (27, 28) secured within each said mounting surface (23, 24), a bore (25) extending through said mounting base (17) in the same plane as or a parallel plane to the axes of said centring pins, and means (26) for aligning and securing said centring tool on the mounting body (14) of said telescopic cylinder wall gauge.

2. A centring tool according to claim 1, wherein said mounting base (17) has co-planartop and bottom surfaces (18, 19) and said mounting surfaces (23, 24) extend between said top and bottom surfaces.

3. A centring tool according to claim 1 or 2, wherein said means (26) for aligning and securing said centring tool is a notched area in said mounting base (17), between said mounting surfaces (23, 24) and intersecting said bore (25) in said mounting base.

4. A centring tool according to claim 1, 2 or 3, in combination with a telescopic cylinder wait gauge ( 11 ).

5. A combination according to claim 4, wherein said tool and gauge are joined to one another.

6. A combination according to claim 4 or 5, wherein said gauge comprises a mounting body (14), a cylindrical handle (11) extending from said mounting body (14), a locking screw (13) on a free end of said handle, and two opposed telescopically extendable contact plungers (15, 16) extending from said mounting body (14), said centring pins (27, 28) of said tool being in offset angular relation to said contact plungers.
